# EUROPÄISCHE PATENTSCHRIFT

(11) **EP 3 011 865 B1**
(45) Veröffentlichungstag und Bekanntmachung des Hinweises auf die Patenterteilung: **06.12.2017**
(21) Anmeldenummer: 15188748.6
(22) Anmeldetag: 07.10.2015
(51) Int. Cl.: A47B 95/04, A47B 97/00, H02G 3/04, H02G 3/06

(54) **MODULAR ERWEITERBARES VERKLEIDUNGSSYSTEM**
MODULAR EXPANDABLE CLADDING SYSTEM
SYSTEME D'HABILLAGE MODULAIRE EXTENSIBLE

(30) Priorität: 20.10.2014 DE 102014221231
(43) Veröffentlichungstag der Anmeldung: 27.04.2016
(73) Patentinhaber: Sedus Stoll AG, 79761 Waldshut (DE)
(72) Erfinder: BLÜMLER, Falk, 79875 Wittenschwand (DE); MAIER, Klaus, 79875 Dachsberg (DE)
(74) Vertreter: Isarpatent

(56) Entgegenhaltungen:
- WO-A2-02/054553
- FR-A1- 2 941 137
- GB-A- 2 378 051
- US-A1- 2003 089 515

## Beschreibung

### GEBIET DER ERFINDUNG

Die vorliegende Erfindung betrifft ein modular erweiterbares Verkleidungssystem für Kabel, Stuhl- oder Tischbeine oder dergleichen.

### TECHNISCHER HINTERGRUND

In Büro- oder Arbeitsplatzumgebungen sind in der Regel zahlreiche elektrische Geräte vorhanden, welche mittels Kabelleitungen miteinander verbunden sind und/oder zu deren Energieversorgung an eine Stromquelle angeschlossen sind. Oftmals finden sich ganze "Kabelsalate" in derartigen Büro- bzw. Arbeitsplatzumgebungen, was bisweilen als unaufgeräumt oder sogar als unästhetisch wahrgenommen wird. Zudem verlaufen Kabel oft unübersichtlich, so dass Kabel erst bei genauerem Hinsehen dem zugehörigen Gerät zugeordnet werden können.

Kabelbinder wurden dazu entwickelt, Kabel oder ganze Kabelbäume aneinander oder an andere Gegenstände zu fixieren. Solche Kabelbinder stellen eine besonders kostengünstige und einfache Möglichkeit dar, um Kabel oder sonstige Leitungen zu bündeln und zusammen zu halten. Jedoch sind mit derartigen Kabelbindern gebündelte Kabel nicht besonders ansprechend, da die entsprechenden Kabel nach wie vor sichtbar bleiben. Zudem sind Kabelbinder im Allgemeinen Einwegprodukte und lassen sich nach ihrem Verschließen meist nicht wieder zerstörungsfrei öffnen.

Neben Kabelbindern existieren auch Kabelschläuche mittels denen sich verschiedene Kabel einerseits zusammenfassen und damit bündeln lassen und andererseits weitgehend kaschieren lassen. Kabelschläuche können z.B. als Schrumpfschlauch oder z.B. als spiralförmige Hülle, in welcher die Kabel eingeführt werden ausgebildet sein. Zumeist sind Kabelschläuche flexibel, sodass die darin angeordneten Kabel ebenfalls flexibel bewegbar sind.

In dem Deutschen Patent DE 103 02 555 B3 ist ein Kabelschlauch beschrieben, welcher an ein anderes Element aufhängbar ist und welches zudem entlang seiner Längsrichtung modular erweiterbar ist.

In dem US-Patent US 5,901,756 ist ferner ein flexibler Strumpf beschrieben, mittels dem ein Kabelbündel verkleidet werden kann. Der dort beschriebene Kabelstrumpf ist aus Kevlar gefertigt und weist einen Reiß- oder Klettverschluss auf. Ein Kabelstrumpf gemäß der US 5,901,756 lässt sich ferner in Längsrichtung durch Ankopplung einer Vielzahl anderer Kabelstrümpfe modular verlängern.

In der WO 02/054553 A2 ist ein Verkleidungssystem beschrieben, welches aus exakt zwei formstabilen, halbschalenförmig Verkleidungselementen ("plastic extrusion") besteht, die über entsprechende Must-Fit-Verbindungsvorrichtungen miteinander verbindbar sind. Mittels dieses Verkleidungssystems ist folglich nur ein einziger Querschnitt und nur eine einzige Querschnittsform für den inneren Hohlraum des Verkleidungssystems möglich, nämlich ein kreisrunder Querschnitt.

Die GB 2 378 051 A beschreibt ein einziges Verkleidungselement beschrieben, welches derart ausgebildet ist, dass es über einen Reißverschluss zu einem Hohlkörper geschlossen werden kann. Dies setzt aber zwingend eine gewisse Flexibilität und damit eben keine Formstabilität dieses Verkleidungselementes voraus.

Die FR 2 941 137 A1 beschreibt ein Gepäcksystem aus zwei miteinander verbindbaren Gepäckelementen (Baggage), welche im montierten Zustand als Handgepäck oder Rucksack fungieren können.

### ZUSAMMENFASSUNG DER ERFINDUNG

Vor diesem Hintergrund liegt der Erfindung nun die Aufgabe zugrunde, ein verbessertes Verkleidungssystem zum Verkleiden von Kabeln, Stuhl- oder Tischbeine oder dergleichen bereitzustellen.

Erfindungsgemäß wird diese Aufgabe durch ein Verkleidungssystem mit den Merkmalen des Patentanspruchs 1 gelöst.

Von Verkleidungselementen länglicher Form sollen Verkleidungselemente mit einer im Verhältnis zu deren Breite deutlich größeren Länge umfasst sein. Zum Beispiel kann vorgesehen sein, dass die Länge eines Verkleidungselements zumindest doppelt so groß wie die Breite eines Verkleidungselements ist. Vorzugsweise ist die Länge eines Verkleidungselements zumindest viermal und insbesondere zumindest zehnmal so groß wie die Breite eines Verkleidungselements.

Durch die Formstabilität der Verkleidungselemente wird sichergestellt, dass ein Verkleidungssystem im montierten Zustand, beispielsweise unter einer einseitigen Last, nicht umkippt. Ebenso verhindert die Formstabilität, dass ein Verkleidungselement Falten bildet. Zudem kann ein erfindungsgemäßes Verkleidungssystem aufgrund der Formstabilität auch mehr oder weniger stark mechanisch beansprucht werden, was insbesondere bei Verwendung in einer Büro- oder Arbeitsplatzumgebungen im Hinblick auf eine längere Lebensdauer vorteilhaft ist.

Das Vorhandensein von im Wesentlichen gleich ausgebildeten Verbindungsvorrichtungen gewährleistet eine modulare Erweiterungsmöglichkeit des Verkleidungssystems durch ein miteinander Verbinden einer Vielzahl von Verkleidungselementen. Die Anzahl der miteinander verbundenen Verkleidungselemente kann ein Nutzer bedarfsgemäß wählen. Somit ist es erfindungsgemäß möglich, ein Verkleidungssystem mit benutzerspezifischem Querschnitt zu schaffen. Das erfindungsgemäße Verkleidungssystem lässt sich damit an die jeweiligen Verhältnisse anpassen. Insbesondere ist es damit möglich, den Querschnitt des Verkleidungssystems im Hinblick auf die Anzahl und/oder Dicke der durch das Verkleidungssystem zu kaschierenden Kabel zu optimieren.

Die Lösbarkeit der Verbindungsvorrichtungen und damit der miteinander verbundenen Verkleidungselemente gewährleistet ferner eine Wiederverwendbarkeit der Verkleidungselemente für ein Verkleidungssystem. So können Verkleidungselemente beliebig oft mittels der Verbindungsvorrichtungen verbunden und gelöst werden, ohne dass sich die Verkleidungselemente hierdurch abnutzen.

Mit dem erfindungsgemäßen System wird eine universelle Verkleidungsmöglichkeit für Kabel, Tischbeine oder dergleichen, beispielsweise andere längliche Teile von Möbelstücken, bereitgestellt, die sich dadurch zudem noch ästhetisch ansprechend gestalten lassen.

Vorteilhafte Ausgestaltungen und Weiterbildungen ergeben sich aus den weiteren Unteransprüchen sowie aus der Beschreibung unter Bezugnahme auf die Figuren der Zeichnung.

Bei einer vorteilhaften Ausführungsform ist eine Verbindungsvorrichtung im Wesentlichen geradlinig entlang einer Längskante an dem Verkleidungselement angebracht. Hierdurch wird eine besonders einfache und zügige Betätigungsmöglichkeit der Verbindungsvorrichtungen geschaffen. Geradlinig bedeutet z.B. entlang einer geraden Längskante, was ästhetisch ansprechend ist. Ferner lassen sich auf diese Weise besonders einfach und elegant einander korrespondierende Verbindungsvorrichtung von verschiedenen Verkleidungselementen verbinden.

Bei einer weiteren vorteilhaften Ausführungsform ist die Verbindungsvorrichtung als Reißverschluss ausgebildet. Ein Verkleidungselement weist dabei an deren Längskanten jeweilige Reißverschlusselemente (oder Seitenteile) derart auf, dass zwei nebeneinander angeordnete Verkleidungselemente an deren benachbarten Längskanten zueinander korrespondierende Reißverschlusselemente des Reißverschlusses zum miteinander Verbinden der beiden Verkleidungselemente aufweist. Der Reißverschluss, auch Zippverschluss oder kurz Zipp/Zip genannt, bezeichnet ein beliebig oft zu lösendes Verschlussmittel, das auf Formschluss beruht. Er besteht aus zwei Seitenteilen (oder Reißverschlusselementen) mit Krampen (kleinen Zähnen) und einem Schieber, mit dem die Krampen ineinander verhakt und wieder gelöst werden können. Dabei ist jeweils ein Seitenteil an der Längskante eines ersten Verkleidungselements angeordnet, während das dazu korrespondierende Seitenteil an einem zweiten Verkleidungselement, welches mit dem ersten Verkleidungsteil verbunden werden soll, angeordnet ist. Ein jeweiliges Verkleidungselement weist ferner an einer Längskante ein erstes Seitenteil und an der gegenüberliegenden zweiten Längskante das zweite, dazu korrespondierende Seitenteil des Reißverschlusses auf. Durch Verwendung solcher Reißverschlüsse werden besonders kostengünstige Verbindungsvorrichtungen bereitgestellt. Ein Reißverschluss ist ferner besonders einfach, ohne allzu großen Krafteinsatz und schnell zu öffnen und zu schließen. Ferner schafft ein Reißverschluss immer eine exakte und vordefinierte Verbindung zweier Verkleidungselemente. Seitenteile von Reißverschlüssen verbinden sich zudem nicht selbstständig, wie etwa ein Klett- oder Magnetverschluss, sondern erst durch definiertes Betätigen eines Benutzers. Dies verhindert ein unerwünschtes Verbinden, ein Verbinden an falscher Stelle, jedoch auch ein unbeabsichtigtes Lösen der Seitenteile des Reißverschlusses.

Bei einer weiteren vorteilhaften Ausführungsform sind die Reißverschlusselemente bzw. Seitenteile an einer Innenseite des Verkleidungselementes angebracht. In der Regel wird sich ein Reißverschlusselement jedoch über die Innenseite hinaus erstrecken. Beispielsweise können die Reißverschlusselemente angenäht sein. Eine Befestigung, etwa durch eine Naht, an der Innenseite eines Verkleidungselementes ist besonders vorteilhaft, da die Naht somit äußeren Einflüssen weniger ausgesetzt ist. Zudem ist ein an der Innenseite eines Verkleidungselementes angebrachtes Reißverschlusselemente aus ästhetischen Gründen vorteilhaft, da die Verbindungsvorrichtung dadurch zumindest teilweise durch das Verkleidungselement selbst verdeckt wird. Durch das Annähen eines Reißverschlusselementes wird zudem eine besonders einfache und kostengünstige Befestigungsmöglichkeit geschaffen.

Ebenfalls denkbar wären an den Kanten angebrachte Klettverschlüsse. Ein Klettverschluss ist überwiegend ein textiles, nahezu beliebig oft zu lösendes Verschlussmittel, welches in einer typischen Form aus zwei gewebten Chemiefaserstreifen besteht, wovon einer davon flexible Widerhäkchen und der andere Schlaufen aufweist. Zusammengepresst ergeben sie einen belastungsfähigen, aber reversiblen Schnellverschluss. Die gewebten Klettbänder bestehen z.B. aus Polyamid-, Polyester-, Polyolefin- oder Polyaramidenfasern. Bei den Hakenbändern können die Haken während des Webens oder später eingearbeitet werden. Ähnlich wie Reisverschlüsse können sie auf einfache Weise an ein Verkleidungselement angenäht werden.

Bei einer weiteren vorteilhaften Ausführungsform ist eine Verbindungsvorrichtung als Druckknopf ausgebildet. Ein Druckknopf ist ein Verschlussmittel aus zwei kleinen, runden Teilen, von denen eines mit einer Vertiefung, das andere mit dazu einem dazu passenden Kopf versehen ist. Die beiden Teile sind an gegenüberliegenden Kanten zweier Verkleidungselemente festgenäht oder genietet und werden zum Schließen ineinander gedrückt. Damit der Kopf einschnappt und sich der Knopf nur bei Zugkraft öffnet, ist die Vertiefung entsprechend als offener Hohlraum oder Ring geformt, sodass die Materialelastizität des Knopfes das Einschnappen ermöglicht. Oder es ist ein zusätzliches seitlich federndes Element eingebaut.

Alternativ kann statt des Druckknopfes auch ein Knopf sowie entsprechendes Knopfloch vorgesehen sein.

Ebenfalls denkbar wären an den Kanten angebrachte Magnetverschlüsse und/oder Steckverbindungen. Eine Steckverbindung ist eine bewegliche Rohrverbindung, deren Dichtwirkung durch Zusammenstecken von Spitzende und Muffe oder einem Rohrschaft und einer Kupplung in Verbindung mit einem elastischen Dichtmittel erzielt wird. Bei Magnetverschlüsse bringt man für die Verbindung typischerweise Elemente entgegengesetzter Polarität zusammen.

Die vorgenannten Verbindungsvorrichtungen stellen vorteilhafte Alternativen zu einem Reißverschluss dar, die bei bestimmten Anwendungen vorteilhaft sind. Vorteilhafterweise sind sie auch an einer Innenseite des Verkleidungselementes angebracht. Zudem sind sie besonders leicht zu betätigen sowie kostengünstig an einem jeweiligen Verkleidungselement anbringbar.

Der Hohlkörper des Verkleidungssystems weist im montierten Zustand eine im Wesentlichen regelmäßig vieleckförmige Querschnittsfläche auf. Das Verkleidungssystem wird dadurch und aufgrund der Formstabilität der Verkleidungselemente sehr stabil und standfest. Unter einem regelmäßigen Vieleck wird ein Polygon mit gleichlangen Seiten und gleichgroßen Innenwinkeln verstanden. "Im Wesentlichen" bedeutet in diesem Kontext, dass die Querschnittsfläche nicht ein exaktes Vieleck im mathematischen Sinne aufweisen muss, sondern lediglich der Form nach einem Vieleck ähnelt oder angenähert sein kann. Beispielsweise sollen von der Formulierung "im Wesentlichen regelmäßig vieleckförmig" auch Flächen mit abgerundeten Seiten umfasst sein. Besonders vorteilhaft für die Stabilität und Standfestigkeit eines Verkleidungssystems ist eine etwa dreieck-förmige Querschnittsfläche. Beim Abstellen eines solchen Verkleidungssystems steht es an drei Punkten oder Bereichen auf, sodass ein derartiges Verkleidungssystems nicht wackeln kann.

Bei einer weiteren vorteilhaften Ausführungsform weist ein Verkleidungselement einen zu dessen Sichtseite hin ausgebeulten Bereich auf. Der ausgebeulte Bereich erstreckt sich z.B. entlang einer Längsrichtung des Verkleidungselements. Diese Ausgestaltung ist besonders vorteilhaft, da ein mit solchen Verkleidungselementen hergestelltes Verkleidungssystem aufgrund der ausgebeulten Bereiche einen größeren Innenraum oder Hohlraum aufweist als ein Verkleidungssystem ohne derartige ausgebeulten Bereiche der Verkleidungselemente. Damit kommt ein Verkleidungssystem, welches aus Verkleidungselementen mit ausgebeulten Bereichen aufgebaut ist, für die Aufnahme einer vorgegebenen Anzahl an Kabeln häufig mit einer geringeren Anzahl an Verkleidungselementen aus. Besonders vorteilhaft ist in diesem Fall ein mit nur zwei Verkleidungselementen aufgebautes Verkleidungssystem, welches ohne nach außen gerichtete ausgebeulte Bereiche keinen Innenraum bzw. Hohlraum zur Aufnahme von Kabeln aufweisen würde, welches aufgrund der ausgebeulten Bereiche einen Innenraum zur Aufnahme von Kabeln aufweist.

Bei einer weiteren vorteilhaften Ausführungsform weist ein Verkleidungselement eine Lasche mit zumindest einer Bohrung auf. Durch die Bohrung ist das Verkleidungssystem mittels eines durch die Bohrung durchgeführten Befestigungsteils, wie etwa einer Schraube, einem Nagel, einem Stift, einer Klammer, einem Bolzen, einem Druckknopf oder dergleichen, an einem Gegenstand, wie etwa einem Tisch, einen Stuhl, einer Wand, etc., montierbar.

Bei einer weiteren vorteilhaften Ausführungsform ist die Lasche in einem bei bestimmungsgemäßer Verwendung oberen Bereich des Verkleidungselements angeordnet. Durch die Anordnung der Lasche in einem oberen Bereich ist ein Verkleidungssystem an einem weiteren Gegenstand, beispielsweise an einem Büro- oder Schreibtisch, montierbar. Dabei kann das Verkleidungssystem derart montiert werden, dass dieses nicht mehr in Kontakt mit dem Boden kommt und dort aufsteht, sondern an dem Gegenstand im Wesentlichen frei herunterhängt. Dadurch ist das Verkleidungssystem mit diesem Gegenstand fest verbunden und wird z.B. bei einem verstellen des Gegenstandes ebenfalls mitverstellt. Ein sich daraus ergebender Bonuseffekt ist, dass das Verkleidungssystem dadurch immer an derselben Stell bezogen auf den jeweiligen Gegenstand positioniert ist, was z.B. im Falle eines Büro- oder Schreibtisches für dortige typische PC-, Monitor-, Ladegerät-, Drucker- und/oder Telefon-Verkabelung von Vorteil ist. Beispielsweise weisen Schreibtischplatten häufig Durchgänge zum Durchführen von Kabeln auf. Demnach wäre es besonders vorteilhaft ein erfindungsgemäßes Verkleidungssystem unterhalb eines derartigen Durchgangs anzubringen. Auch wird ein unbewusstes Umstoßen des Verkleidungssystems dadurch vermieden. Zudem ist durch das Aufhängen eines Verkleidungssystems unterhalb des Verkleidungssystems ausreichend Platz für andere Gegenstände oder z.B. für eine Bodenreinigung.

Bei einer weiteren vorteilhaften Ausführungsform weist zumindest ein Verkleidungselement eine Lasche mit mindestens einer vorpräparierten Sollknicklinie auf. Die Lasche lässt sich dadurch umknicken oder umbiegen, wobei die Sollknicklinie dabei als Knick- bzw. Biegeachse fungiert. Das Knicken bzw. Biegen kann dabei - je nach verwendetem Material - reversibel oder irreversibel sein. Je nach verwendetem Material erfolgt dabei das Knicken bzw. Biegen durch plastische oder elastische Verformung. Insbesondere ist es möglich, ein Verkleidungssystem an einem schrägen Gegenstand zu montieren, ohne dabei das Verkleidungssystem schräg auszurichten. Durch die Knick- bzw. Biegemöglichkeit der Lasche kann ein erfindungsgemäßes Verkleidungssystem also an beliebigen Stellen eines Gegenstandes angebracht werden, sodass diese Ausführungsform für einen Benutzer eine höhere Flexibilität bei der Anbringung des Verkleidungssystems an einem Gegenstand ermöglicht.

Bei einer weiteren vorteilhaften Ausführungsform ist die Sollknicklinie als eine Materialdünnung und/oder ein Bereich mit reduzierter Materialfestigkeit und/oder ein Bereich mit reduzierter Materialdichte und/oder einen elastisch oder plastisch verformbaren Bereich des Verkleidungselements ausgebildet. Sämtliche vorstehend genannten Alternativen sind herstellungstechnisch besonders einfach und kostengünstig zu fertigen und ermöglichen die oben genannte Knick- bzw. Biegefunktion.

Bei einer weiteren vorteilhaften Ausführungsform weist eine Lasche eine Vielzahl von Bohrungen und Sollknicklinien auf, die zueinander alternierend angeordnet sind. Somit ist ein Verkleidungssystem in seiner Höhe anpassbar, insbesondere verkürzbar. Beispielsweise könnte sich bei der Montage des Verkleidungssystems an einem Schreibtisch das Problem stellen, dass das Verkleidungssystem höher ist als der Schreibtisch. In einem Fall solchen Fall hat ein Benutzer die Möglichkeit die Verkleidungselemente an ihren Sollknicklinien zu knicken bzw. zu biegen und somit gewissermaßen zu verkürzen, so dass das Verkleidungssystem unter den Schreibtisch passt, ohne hierzu die Lasche zu zerstören. Zudem ermöglich diese Ausgestaltung, dass die Lasche zum Zwecke des Befestigens bedarfsgemäß an eine gewünschte Stelle positioniert wird. Dies erhöht die Flexibilität und Gestaltungsmöglichkeit beim Befestigen des Verkleidungssystems.

Bei einer weiteren vorteilhaften Ausführungsform besteht ein Verkleidungselement zumindest zum Teil aus einem Textil, insbesondere aus einem Filzgewebe. Filz ist ein textiles Flächengebilde aus einem ungeordneten, nur schwer zu trennenden Fasergut. Filz ist also eine nicht gewebte Textilie. Filzgewebe ist vorteilhafterweise wasserabweisend sowie wärmeisolierend. Zudem sind Filzgewebe mit verschiedenen Dichten verfügbar, so dass ein Hersteller die Steifigkeit eines Verkleidungselementes passend auswählen kann. Ein Verkleidungssystem kann jedoch auch aus anderen vorteilhaften Materialien, wie etwa Pappe, spritzgegossenem Kunststoff, Faser-Kunststoffe, Plexiglas, Aramid, Blech, Metall oder dergleichen, gefertigt sein.

In einer weiteren vorteilhaften Ausgestaltung besteht ein Verkleidungselement zumindest an der Sollknicklinie aus einem derartigen Material, dessen Materialeigenschaft und/oder Materialdicke ein manuelles Abschneiden eines Teils der Lasche mittels einer Schere oder Messer entlang der Sollknicklinie erlaubt. Das Abschneiden eines Verkleidungselementes stellt eine weitere Anpassungsmöglichkeit an individuelle Erfordernisse hinsichtlich der Größe und/oder Form eines Verkleidungssystems dar. Insbesondere können auf diese Weise unerwünschte oder nicht gebrauchte Laschen oder lediglich Bereiche davon auf einfache Weise entfernt werden, wodurch das Verkleidungssystem durch einen Benutzer bedarfsgemäß und in ansprechender Weise geformt werden kann.

Bei einer weiteren vorteilhaften Ausführungsform ist an zumindest einer Kante des Verkleidungselementes ein Standbereich vorgesehen, welcher derart angeordnet und ausgebildet ist, dass das Verkleidungssystem bei miteinander verbundenen Verkleidungselementen auf den jeweiligen Standbereichen selbstständig steht. Es ist zweckdienlich, den Standbereich an der unteren Kante (Orientierung bei bestimmungsgemäßer Verwendung) eines Verkleidungselementes auszubilden, auf welcher das Verkleidungssystem bei bestimmungsgemäßer Verwendung aufsteht.

Bei einer weiteren vorteilhaften Ausführungsform ist zumindest ein Verkleidungselement an einem Eckbereich derart abgerundet oder abgeschrägt ausgebildet, dass zwei miteinander verbundene Verkleidungselemente an diesen Eckenbereichen Auslassungen aufweisen, welche geeignet sind, Kabel von außen in das Innere des Verkleidungssystems einzuführen bzw. im Inneren des Verkleidungssystems vorhandene Kabel über diese Auslassungen nach außen zu führen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Figur 1: eine Ansicht einer ersten, allgemeinen Ausführungsform eines erfindungsgemäßen Verkleidungssystems;
- Figur 2: eine Frontansicht eines erfindungsgemäßen Verkleidungselements gemäß einer weiteren Ausführungsform;
- Figur 3: eine Seitenansicht des erfindungsgemäßen Verkleidungselements aus Fig. 2;
- Figur 4a: ein Detail des erfindungsgemäßen Verkleidungselements aus Fig. 2, welches den Laschenbereich in einem ersten Zustand zeigt;
- Figur 4b: ein Detail des erfindungsgemäßen Verkleidungselements aus Fig. 2, welches den Laschenbereich in einem zweiten Zustand zeigt;
- Figur 4c: eine Unteransicht des erfindungsgemäßen Verkleidungselements aus Fig. 2;
- Figur 5, 5a: eine perspektivische Ansicht und eine Unteransicht eines erfindungsgemäßen Verkleidungssystems gemäß einer weiteren Ausführungsform;
- Figur 6, 6a: eine perspektivische Ansicht und eine Unteransicht eines erfindungsgemäßen Verkleidungssystems gemäß einer weiteren Ausführungsform.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

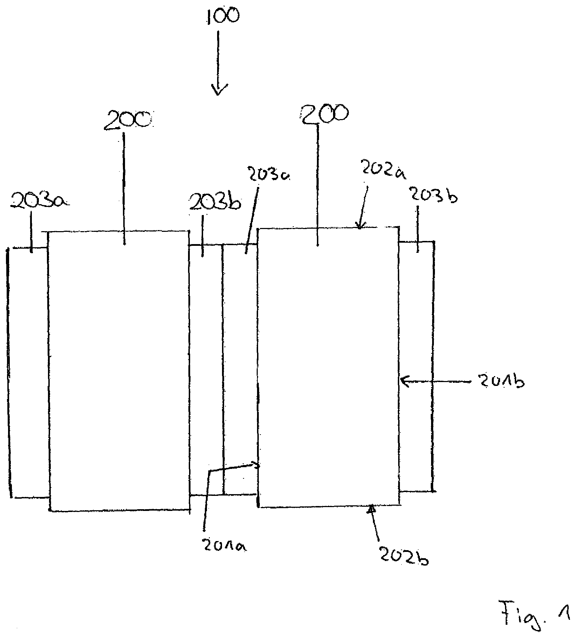

Figur 1 zeigt eine Ansicht einer ersten, allgemeinen Ausführungsform eines erfindungsgemäßen Verkleidungssystems. In Figur 1 ist dabei das Verkleidungssystem mit Bezugszeichen 100 bezeichnet. Das Verkleidungssystem 100 umfasst im gezeigten Beispiel zwei Verkleidungselemente 200, die hier eine längliche, rechteckförmige Gestalt aufweisen. Jedes Verkleidungselement 200 weist somit zwei gegenüber angeordnete lange Kanten 201a, 201b sowie zwei gegenüber angeordnete kurze Kanten 202a, 202b auf.

Die Verkleidungselemente 200 sind dabei aus einem formstabilen Material gefertigt.

Ein jeweiliges Verkleidungselemente 200 weist entlang jeder langen Kante 201a, 201b Elemente einer Verbindungsvorrichtung 203a, 203b auf. Die Elemente der Verbindungsvorrichtungen 203a, 203b sind derart ausgebildet und an langen Kanten 201a, 201b der Verkleidungselemente 200 angebracht, dass sich diese miteinander verbinden lassen (must fit Funktion), sodass auf diese Weise ein modular erweiterbares Verkleidungssystem 100 erzeugt wird. Dabei lassen sich jeweils zwei Verkleidungselemente 200 miteinander über jeweils korrespondierende Verbindungsvorrichtungen 203a, 203b an deren Längskanten 201a, 201b formschlüssig und/oder kraftschlüssig lösbar verbinden.

Im in Figur 1 gezeigten Beispiel sind die Verkleidungselemente 200 nur an einer Längskante 201a, 201b miteinander verbunden, also noch nicht vollständig verbunden. Im vollständig verbundenen Zustand der Verkleidungselemente 200 ist das Verkleidungssystem 100 als ein (in Fig. 1 nicht gezeigter) formstabiler, länglicher Hohlkörper ausgebildet. Dieses Verkleidungssystem 100 ist geeignet, im Hohlkörper vor allem Kabel, Leitungen und dergleichen, jedoch z.B. auch Stuhl- oder Tischbeine, aufzunehmen und dadurch zu verkleiden.

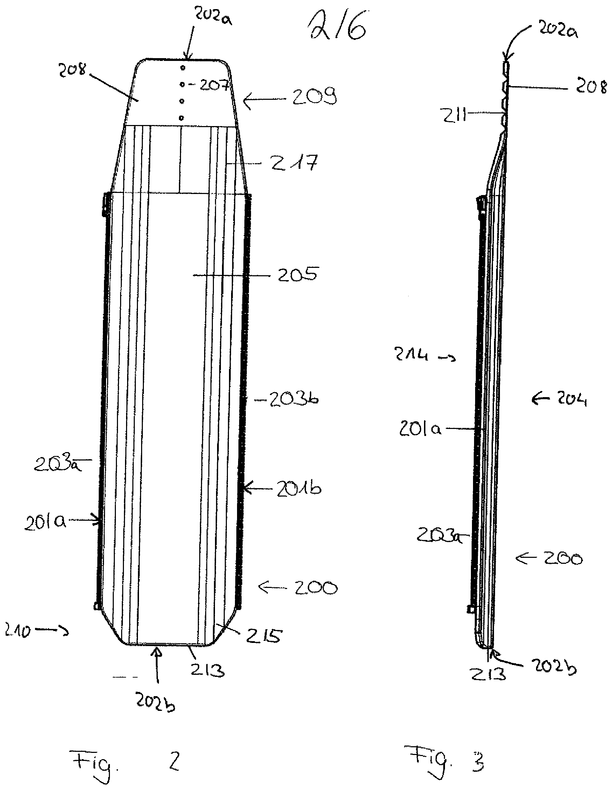

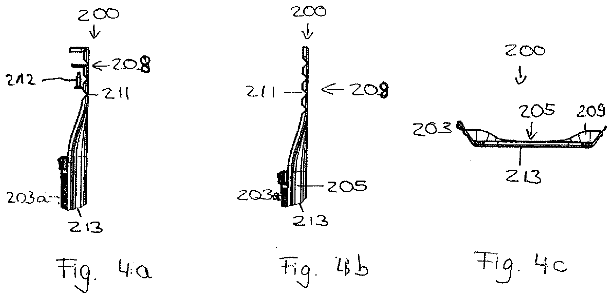

Nachfolgend wird anhand der Figuren 2 - 4c ein weiteres Ausführungsbeispiel eines erfindungsgemäßen Verkleidungssystems 100 beschrieben. Dabei zeigen die Figuren 2 und 3 eine Frontansicht bzw. eine Seitenansicht des erfindungsgemäßen Verkleidungselements. Die Figur 4a und 4b zeigen Details dieses Verkleidungselements im Bereich der Lasche in verschiedenen Zuständen. Figur 4c zeigt schließlich eine Unteransicht eines erfindungsgemäßen Verkleidungselements.

Das hier gezeigte Verkleidungselement 200 ist von einer länglichen Form und umfasst eine erste und eine zweite lange Kante 201a, 201b sowie eine erste und zweite kurze Kante 202a, 202b. An den langen Kanten 201a, 201b sind jeweils Verbindungsvorrichtungen 203a, 203b, welche als zueinander korrespondierende Reißverschlusselemente 203a, 203b ausgebildet sind, angebracht. Die Reißverschlusselemente 203a, 203b erstrecken sich zwischen abgeschrägten Bereichen 215, 217 entlang eines Großteils der langen Kanten 201a, 201b eines Verkleidungselementes 200. Die Reißverschlusselemente 203a, 203b sind an einer Innenseite 200 des Verkleidungselementes angenäht.

Das Verkleidungselement 200 zeigt eine zu einer Sichtseite 204 ragende Ausbeulung 205, welche sich in etwa mittig über nahezu die gesamte Länge eines Verkleidungselementes 200 erstreckt.

Ein Verkleidungselement 200 umfasst zudem eine Lasche 208 in einem - bei bestimmungsgemäßer Verwendung - oberen Bereich 209 des Verkleidungselementes 200. In der Lasche 208 sind im gezeigten Beispiel jeweils vier mittig angeordnete Bohrungen 207 sowie vorpräparierte Sollknicklinien 211 ausgebildet. Dabei sind die Bohrungen 207 in Längsrichtung alternierend zu den Sollknicklinien 211 angeordnet. Die Sollknicklinien 211 sind im gezeigten Beispiel durch eine Dünnung des Materials ausgebildet. Hierdurch ist ein Verkleidungselement 200 an seinen Sollknicklinien 211 biegbar, abknickbar oder sogar mittels eines Messers oder einer Schere abtrennbar. Die Sollknicklinien 211 können insbesondere durch ein geeignetes Herstellungsverfahren vorpräpariert sein. Beispielsweise ist es zweckmäßig, die Sollknicklinien 211 durch Wärmebehandlung, Stanzen und/oder Anritzen zu erzeugen, so dass ein Verbindungselement 200 längs einer Sollknicklinie 211 leicht abknickbar oder durchtrennbar ist.

Im Detail der Figur 4a ist angedeutet, dass ein Verkleidungselement 200 sowohl seitlich als auch von unten mittels einer Schraube 212 an einem weiteren, hier nicht gezeigten Gegenstand befestigt werden kann, je nach dem in welche Richtung die Lasche 208 um die Sollknicklinie 211 abgeknickt wird.

Ferner weist ein erfindungsgemäßes Verkleidungssystem 100 in einem unteren Bereich 210 einen Standbereich 213 auf, auf welchem das Verkleidungssystem 100 aufrecht und stabil auf einer hier nicht gezeigten ebenen Unterfläche zu stehen vermag.

An der rechten und linken Seite des Standbereiches 213 weist ein Verkleidungselement 200 jeweils einen abgeschrägten Bereich 215 auf. Werden mehrere Verkleidungselemente 200 zu einem Verkleidungssystem 100 verbunden, so bilden die abgeschrägten Bereiche 215 Auslassungen 101a, über welche Gegenstände, wie etwa Kabel, in den Innenraum des Verkleidungssystems 100 eingeführt werden können.

Zusätzlich weist ein Verkleidungselement 200 in einem oberen Bereich 209 an seiner rechten und linken Kante weitere abgeschrägte Bereiche 217 auf. Werden mehrere Verkleidungselemente 200 zu einem Verkleidungssystem 100 verbunden, so bilden die abgeschrägten Bereiche 217 ebenfalls Auslassungen 101b, die zum Einführung von Gegenständen in einen Innenraum 206 des Verkleidungssystems 100 geeignet sind.

Das Verkleidungselement 200 weist in den abgeschrägten Bereichen 215, 217 keine Verbindungsvorrichtungen 203a, 203b bzw. Reißverschlusselemente auf.

Figur 4c zeigt eine Unteransicht des erfindungsgemäßen Verkleidungselements 200, bei der die Ausbeulung 205 eines Verkleidungselementes 200 besonders deutlich wird. Ebenso ist dort ersichtlich, dass die Lasche 208 bereits schräg abgeknickt ist.

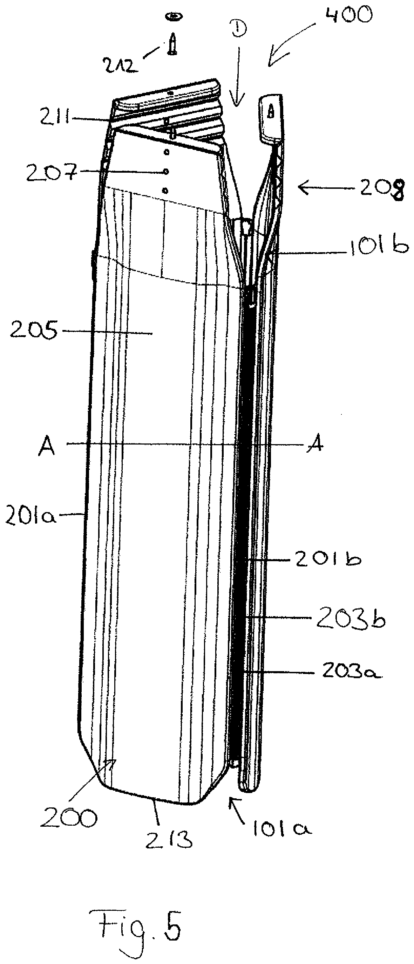

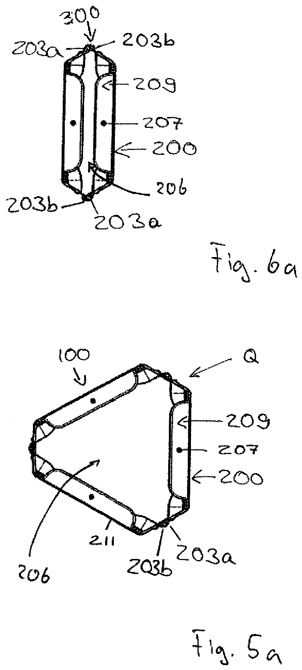

Nachfolgend wird anhand der Figuren 5, 5a ein weiteres Ausführungsbeispiel eines erfindungsgemäßen Verkleidungssystems 100 beschrieben. Die Figuren 5 und 5a zeigen ein erfindungsgemäßes Verkleidungssystem 400 in einer perspektivischen Ansicht bzw. in einer Unteransicht.

Das hier gezeigte Verkleidungssystem 400 weist drei Verkleidungselemente 200 auf. Das Verkleidungssystem 400 weist in seinen oberen sowie unteren Eckbereichen jeweils Auslassungen 101a, 101b zwischen den jeweiligen Verkleidungselementen zum Ein- und Ausführen von Kabeln in den Innenraum 206 auf.

Wie in Figur 5 angedeutet ist, kann ein modular erweiterbares Verkleidungssystem 400 mit einer Schraube 212, welche durch eine Bohrung 207 der Lasche 208 geführt wird, an einem weiteren Gegenstand befestigt werden. Demnach kann das erfindungsgemäße Verkleidungssystem 400 insbesondere als Hängeverkleidung, welche an einem weiteren Gegenstand hängt, verwendet werden.

Das Verkleidungssystem 400 in den Figuren 5 und 5A weist hier eine im Wesentlichen dreiecksförmige Grundfläche auf. Jedoch kann das Verkleidungssystem 400 abhängig von der Anzahl an verwendeten Verkleidungselementen 200 noch modular erweitert werden, beispielsweise zu einem Verkleidungssystem 400 mit einer im Wesentlichen regelmäßig vieleckförmigen Grundfläche. Dass ein Verkleidungselement 200 keine vollständig geradlinigen Kanten 201a, 201b aufweist, steht der im Wesentlichen regelmäßig vieleckförmigen Grundfläche nicht entgegen. Die Verkleidungselemente 200 des Verkleidungssystems 400 in Figur 5 sind insbesondere derart geformt, dass ein Verkleidungssystem 400 mit einer beliebigen Anzahl an Verkleidungselementen 200 stets eine Grundfläche eines im Wesentlichen regelmäßigen Vielecks aufweist.

Figur 5a zeigt eine Draufsicht des erfindungsgemäßen Verkleidungssystems 400 gemäß Figur 5 entlang eines Querschnitts A-A, aus der u.a. auch die Querschnittsform sichtbar ist. Zudem ist in der Figur 5a ersichtlich, dass die oberste Sollknickkante 211 der Lasche 208 bereits abgeknickt ist, so dass der Bereich oberhalb der obersten Sollknickkante in einem abgeschrägten Winkel zum übrigen Teil der Lasche 208 steht.

Figur 5a zeigt auch, dass die über die Reißverschlüsse 203a, 203b miteinander verbundenen Verkleidungselemente 200 ein Verkleidungssystem 400 bilden, welches ein Hohlkörper mit einem Durchgang D ausbildet. Dieser Hohlkörper ist geeignet, Kabel und dergleichen aufzunehmen.

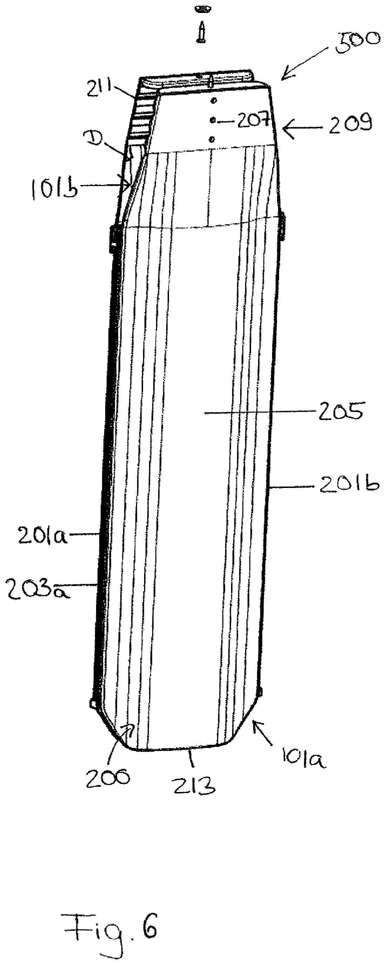

Nachfolgend wird anhand der Figuren 6 und 6a ein weiteres Ausführungsbeispiel eines erfindungsgemäßen Verkleidungssystems 500 beschrieben. Die Figuren 6 und 6a zeigen ein erfindungsgemäßes Verkleidungssystem 500 in einer perspektivischen Ansicht bzw. in einer Unteransicht.

Im Unterschied zu dem anhand der Figuren 5, 5a gezeigten Ausführungsbeispiel zeigen die Figuren 6 und 6A ein Verkleidungssystem 500 mit nur zwei Verkleidungselementen 200. Das Verkleidungssystem 500 ist demnach von deutlich kompakterer Form. Dennoch ist das Verkleidungssystem 500 hier bedingt durch die nach außen gerichteten Ausbeulungen 205 zur Aufnahme von Gegenständen geeignet.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar ohne von dem Schutzumfang der Ansprüche abzuweichen.

### Bezugszeichenliste

- 100: Verkleidungssystem
- 101a, 101b: Auslassungen

- 200: Verkleidungselement
- 201a, 201b: lange Kanten
- 202a, 202b: kurze Kanten
- 203a, 203b: Reißverschlusselemente, Elemente der Verbindungsvorrichtung
- 204: Sichtseite
- 205: Ausbeulung
- 207: Bohrung
- 208: Lasche
- 209: oberer Bereich
- 210: unterer Bereich
- 211: Sollknicklinie
- 213: Standbereich
- 215: unterer abgeschrägter Bereich
- 217: oberer abgeschrägter Bereich
- 212: Schraube
- 206: Innenraum
- 214: Innenseite

- 400: Verkleidungssystem
- 500: Verkleidungssystem

- D: Durchgang
- Q: Querschnittsfläche

## Patentansprüche

1. Modular erweiterbares Verkleidungssystem (100, 400, 500) zum Verkleiden von Kabeln, Stuhl- oder Tischbeinen oder dergleichen,
mit mindestens zwei länglich ausgebildeten, formstabilen, gleich ausgebildeten und beliebig modular erweiterbaren Verkleidungselementen (200), die jeweils Verbindungsvorrichtungen (203a, 203b) aufweisen,
- wobei jeweilige Verbindungsvorrichtungen (203a, 203b) eines Verkleidungselements (200) derart ausgebildet und an Längskanten (201a, 201b) der Verkleidungselemente (200) vorgesehen sind, dass jeweils zwei Verkleidungselemente (200) miteinander über jeweils korrespondierende Verbindungsvorrichtungen (203a, 203b) an deren Längskanten (201a, 201b) formschlüssig und/oder kraftschlüssig lösbar verbindbar sind,
- wobei das Verkleidungssystem (100, 400, 500) im verbundenen Zustand der Verkleidungselemente (200) als formstabiler, länglicher und beidseitig offener Hohlkörper ausgebildet ist, dessen Durchgang (D) zur Aufnahme von Kabeln, Stuhl- oder Tischbeinen oder dergleichen geeignet ist,
- wobei der Hohlkörper des Verkleidungssystems (100) im montierten Zustand eine im Wesentlichen regelmäßig vieleckförmige Querschnittsfläche (Q) aufweist.

2. Verkleidungssystem nach Anspruch 1,
**dadurch gekennzeichnet,**
**dass** eine Verbindungsvorrichtung (203a, 203b) im Wesentlichen geradlinig entlang einer jeweiligen Längskante (201a, 201b) an dem Verkleidungselement (200) angebracht ist.

3. Verkleidungssystem nach einem der vorherigen Ansprüche,
**dadurch gekennzeichnet,**
**dass** die Verbindungsvorrichtung (203a, 203b) als Reißverschluss ausgebildet ist, wobei ein Verkleidungselement (200) an deren Längskanten jeweilige Reißverschlusselemente (203a, 203b) derart aufweist, dass zwei nebeneinander angeordnete Verkleidungselement (200) an deren benachbarten Längskanten zueinander korrespondierende Reißverschlusselemente (203a, 203b) des Reißverschlusses zum miteinander Verbinden der beiden Verkleidungselemente (200) aufweist.

4. Verkleidungssystem nach Anspruch 3,
**dadurch gekennzeichnet,**
**dass** die Reißverschlusselemente (203a, 203b) an einer Innenseite (214) des Verkleidungselementes (200) angebracht, insbesondere angenäht, sind.

5. Verkleidungssystem nach einem der vorherigen Ansprüche,
**dadurch gekennzeichnet,**
**dass** die Verbindungsvorrichtung (203a, 203b) eines Verkleidungselements (200) als Knopf und entsprechendes Knopfloch, als Klettverschluss, als Druckknopf, als Magnetverschluss und/oder als Steckverbindung ausgebildet ist.

6. Verkleidungssystem nach einem der vorherigen Ansprüche,
**dadurch gekennzeichnet,**
**dass** ein Verkleidungselement (200) einen zu dessen Sichtseite hin ausgebeulten Bereich (205) aufweist, welcher sich entlang einer Längsrichtung des Verkleidungselements (200) erstreckt.

7. Verkleidungssystem nach einem der vorherigen Ansprüche,
**dadurch gekennzeichnet,**
**dass** ein Verkleidungselement (200) eine Lasche (208) mit zumindest einer Bohrung (207) aufweist, über welche das Verkleidungssystem (100, 400, 500) mittels eines durch die Bohrung (207) durchgeführten Befestigungsteils an einem Gegenstand montierbar ist.

8. Verkleidungssystem nach Anspruch 7,
**dadurch gekennzeichnet,**
**dass** die Lasche (208) in einem oberen Bereich (209) des Verkleidungselements (200) angeordnet ist.

9. Verkleidungssystem nach einem der vorherigen Ansprüche,
**dadurch gekennzeichnet,**
**dass** zumindest ein Verkleidungselement (200) eine Lasche (208) mit mindestens einer vorpräparierten Sollknicklinie (211) aufweist.

10. Verkleidungssystem nach Anspruch 9,
**dadurch gekennzeichnet,**
**dass** die Sollknicklinie (211) als eine Materialdünnung und/oder ein Bereich mit reduzierter Materialfestigkeit und/oder ein Bereich mit reduzierter Materialdichte und/oder einen elastisch oder plastisch verformbaren Bereich des Verkleidungselements (200) ausgebildet ist.

11. Verkleidungssystem nach einem der vorherigen Ansprüche,
**dadurch gekennzeichnet,**
**dass** zumindest ein Verkleidungselement (200) eine Lasche (208) aufweist, die eine Vielzahl von Bohrungen und Sollknicklinien aufweist, die zueinander alternierend angeordnet sind.

12. Verkleidungssystem nach einem der vorherigen Ansprüche,
**dadurch gekennzeichnet,**
**dass** ein Verkleidungselement (200) zumindest zum Teil aus einem Textil, insbesondere aus einem Filzgewebe, besteht.

13. Verkleidungssystem nach einem der vorherigen Ansprüche,
**dadurch gekennzeichnet,**
**dass** zumindest ein Verkleidungselement (200) eine Lasche (208) mit mindestens einer vorpräparierten Sollknicklinie (211) aufweist, wobei
ein Verkleidungselement (200) zumindest an einer Sollknicklinie aus einem derartigen Material besteht, dessen Materialeigenschaft und/oder Materialdicke ein manuelles Abschneiden eines Teils der Lasche (208) mittels einer Schere entlang der Sollknicklinie erlaubt.

14. Verkleidungssystem nach einem der vorherigen Ansprüche,
**dadurch gekennzeichnet,**
**dass** an einer Kante des Verkleidungselementes (200), vorzugsweise die bei bestimmungsgemäßer Verwendung untere Kante, ein Standbereich (213) vorgesehen ist, welcher derart angeordnet und ausgebildet ist, dass das Verkleidungssystem (100, 400, 500) bei miteinander verbundenen Verkleidungselementen (200) auf den jeweiligen Standbereichen (213) selbstständig steht.

15. Verkleidungssystem nach einem der vorherigen Ansprüche,
**dadurch gekennzeichnet, dass** zumindest ein Verkleidungselement (200) an einem Eckbereich derart abgerundet oder abgeschrägt ausgebildet ist, dass zwei miteinander verbundene Verkleidungselemente (200) an diesen Eckenbereichen Auslassungen (101a, 101b) aufweisen, welche geeignet sind, im Inneren des Verkleidungssystem (100, 400, 500) vorhandene Kabel über diese Auslassungen (101a, 101b) nach außen zu führen.

## Claims

1. Expandable modular sheathing system (100, 400, 500) for covering cables, chair legs or table legs or the like, with at least two elongated, dimensionally stable, identically shaped and to any extent expandable modular sheathing elements (200), each having connecting means (203a, 203b),
- wherein respective connecting means (203a, 203b) of a sheathing element (200) are formed and provided on the longitudinal edges (201a, 201b) of the sheathing elements (200) such that respectively two sheathing elements (200) are each detachably connectable in a form-fitting and/or force-fitting manner by means of respectively corresponding connecting means (203a, 203b) on their longitudinal edges (201a, 201b),
- wherein the sheathing system (100, 400, 500) in the connected state of the sheathing elements (200) is provided as a dimensionally stable, elongated hollow body open to both sides, whose passage (D) is suitable for accommodating cables, chair legs or table legs or the like,
- wherein the hollow body of the sheathing system (100) in the mounted state has a cross-sectional area (Q) which is substantially a regular polygon in form.

2. Sheathing system according to claim 1, **characterised in that** a connecting means (203a, 203b) is mounted on the sheathing element (200) substantially in a straight line along a respective longitudinal edge (201a, 201b).

3. Sheathing system according to any one of the preceding claims, **characterised in that** the connecting means (203a, 203b) is provided as a zipper, wherein a sheathing element (200) has respective zipper elements (203a, 203b) on its longitudinal edges such that two mutually adjacent sheathing elements (200) on their adjacent longitudinal edges have reciprocally corresponding zipper elements (203a, 203b) of the zipper for interconnecting the two sheathing elements (200).

4. Sheathing system according to claim 3, **characterised in that** the zipper elements (203a, 203b) are attached, in particular sewn, to an internal face (214) of the sheathing element (200).

5. Sheathing system according to any one of the preceding claims, **characterised in that** the connecting means (203a, 203b) of a sheathing element (200) is provided as a button and a corresponding buttonhole, as a hook and loop fastener, as a press stud, as a magnetic fastener and/or as a push-in connection.

6. Sheathing system according to any one of the preceding claims, **characterised in that** a sheathing element (200) has a region (205) bulging outwards (205) towards its visible side extending in a longitudinal direction of the sheathing element (200).

7. Sheathing system according to any one of the preceding claims, **characterised in that** a sheathing element (200) has a flap (208) with at least one hole (207) via which the sheathing system (100, 400, 500) is mountable on an article by means of a fastening part penetrating the hole (207) .

8. Sheathing system according to claim 7, **characterised in that** the flap (208) is arranged in an upper region (209) of the sheathing element (200).

9. Sheathing system according to any one of the preceding claims, **characterised in that** at least one sheathing element (200) has a flap (208) with at least one pre-prepared design bending line (211).

10. Sheathing system according to claim 9, **characterised in that** the design bending line (211) is provided as a thinning of the material and/or a region of reduced material strength and/or a region of reduced material thickness and/or an elastically or plastically deformable region of the sheathing element (200).

11. Sheathing system according to any one of the preceding claims, **characterised in that** at least one sheathing element (200) has a flap (208) having a plurality of holes and design bending lines which are arranged so as to alternate relative to one another.

12. Sheathing system according to any one of the preceding claims, **characterised in that** a sheathing element (200) is composed at least in part of a textile, particularly a felt fabric.

13. Sheathing system according to any one of the preceding claims, **characterised in that** at least one sheathing element (200) has a flap (208) with at least one pre-prepared design bending line (211), wherein a sheathing element (200) consists at least at a design bending line of such a material whose material property and/or material thickness permits manual severing of a portion of the flap (208) along the design bending line by means of scissors.

14. Sheathing system according to any one of the preceding claims, **characterised in that** on one edge of the sheathing element (200), preferably the lower edge in the case of appropriate use, a standing region (213) is provided, being arranged and formed such that the sheathing system (100, 400, 500) stands independently on the respective standing regions (213) in the case of interconnected sheathing elements (200).

15. Sheathing system according to any one of the preceding claims, **characterised in that** at least one sheathing element (200) is rounded off or chamfered in a corner region such that two interconnected sheathing elements (200) have gaps (101a, 101b) in these corner regions suitable for guiding cables located in the interior of the sheathing system (100, 400, 500) outwards through these gaps (101a, 101b).

## Revendications

1. Système d'habillage modulaire extensible (100, 400, 500) destiné à l'habillage de câbles, pieds de chaise ou de table ou similaire,
comportant au moins deux éléments d'habillage (200) réalisés de forme allongée, indéformables, réalisés identiques et extensibles à volonté de manière modulaire, qui comportent respectivement des dispositifs de liaison (203a, 203b),
- dans lequel des dispositifs de liaison (203a, 203b) respectifs d'un élément d'habillage (200) sont réalisés et prévus sur des arêtes longitudinales (201a, 201b) des éléments d'habillage (200) de telle manière que respectivement deux éléments d'habillage (200) peuvent être reliés l'un à l'autre de manière détachable au niveau de leurs arêtes longitudinales (201a, 201b) par complémentarité de formes et/ou par adhérence par le biais de dispositifs de liaison (203a, 203b) respectivement correspondants,
- dans lequel le système d'habillage (100, 400, 500), lorsque les éléments d'habillage (200) sont reliés, est réalisé comme corps creux indéformable, de forme allongée et ouvert des deux côtés, dont le passage (D) est adapté pour recevoir des câbles, des pieds de chaise ou de table ou similaire,
- dans lequel le corps creux du système d'habillage (100) comporte, à l'état monté, une surface de section transversale (Q) en forme de polygone sensiblement régulier.

2. Système d'habillage selon la revendication 1, **caractérisé en ce qu'**un dispositif de liaison (203a, 203b) est monté sur l'élément d'habillage (200) de manière sensiblement droite le long d'une arête longitudinale (201a, 201b) respective.

3. Système d'habillage selon l'une des revendications précédentes, **caractérisé en ce que** le dispositif de liaison (203a, 203b) est réalisé comme fermeture à glissière, un élément d'habillage (200) comportant sur ses arêtes longitudinales des éléments de fermeture à glissière (203a, 203b) respectifs de telle manière que deux éléments d'habillage (200) disposés l'un à côté de l'autre comportent sur leurs arêtes longitudinales adjacentes des éléments de fermeture à glissière (203a, 203b) correspondants entre eux de la fermeture à glissière pour la liaison mutuelle des deux éléments d'habillage (200).

4. Système d'habillage selon la revendication 3, **caractérisé en ce que** les éléments de fermeture à glissière (203a, 203b) sont montés, en particulier cousus, sur un côté intérieur (214) de l'élément d'habillage (200).

5. Système d'habillage selon l'une des revendications précédentes, **caractérisé en ce que** le dispositif de liaison (203a, 203b) d'un élément d'habillage (200) est réalisé comme bouton et boutonnière correspondante, comme fermeture à bande auto-agrippante, comme bouton-pression, comme fermeture magnétique et/ou comme liaison par emboîtement.

6. Système d'habillage selon l'une des revendications précédentes, **caractérisé en ce qu'**un élément d'habillage (200) comporte une zone bombée (205) vers son côté visible, qui s'étend le long d'une direction longitudinale de l'élément d'habillage (200).

7. Système d'habillage selon l'une des revendications précédentes, **caractérisé en ce qu'**un élément d'habillage (200) comporte une languette (208) dotée d'au moins un alésage (207), par le biais duquel le système d'habillage (100, 400, 500) peut être monté sur un objet au moyen d'une pièce de fixation insérée dans l'alésage (207).

8. Système d'habillage selon la revendication 7, **caractérisé en ce que** la languette (208) est disposée dans une zone supérieure (209) de l'élément d'habillage (200).

9. Système d'habillage selon l'une des revendications précédentes, **caractérisé en ce qu'**au moins un élément d'habillage (200) comporte une languette (208) dotée d'au moins une ligne de pliage programmé (211) préparée préalablement.

10. Système d'habillage selon la revendication 9, **caractérisé en ce que** la ligne de pliage programmé (211) est réalisée comme amincissement de matériau et/ou une zone à résistance réduite de matériau et/ou une zone à densité réduite de matériau et/ou une zone déformable élastiquement ou plastiquement de l'élément d'habillage (200) .

11. Système d'habillage selon l'une des revendications précédentes, **caractérisé en ce qu'**au moins un élément d'habillage (200) comporte une languette (208), qui comporte une pluralité d'alésages et de lignes de pliage programmé, qui sont disposés en alternance les uns avec les autres.

12. Système d'habillage selon l'une des revendications précédentes, **caractérisé en ce qu'**un élément d'habillage (200) est composé au moins en partie d'un textile, en particulier d'un tissu feutré.

13. Système d'habillage selon l'une des revendications précédentes, **caractérisé en ce qu'**au moins un élément d'habillage (200) comporte une languette (208) dotée d'au moins une ligne de pliage programmé (211) préparée préalablement, dans lequel un élément d'habillage (200) est composé au moins sur une ligne de pliage programmé en un matériau dont la nature de matériau et/ou l'épaisseur de matériau permet un découpage manuel d'une partie de la languette (208) au moyen de ciseaux le long de la ligne de pliage programmé.

14. Système d'habillage selon l'une des revendications précédentes, **caractérisé en ce que** sur une arête de l'élément d'habillage (200), de préférence l'arête inférieure lors d'une utilisation conforme à sa destination, une zone d'appui (213) est prévue, qui est disposée et réalisée de telle manière que le système d'habillage (100, 400, 500) se tient debout de manière autonome sur les zones d'appui (213) respectives lorsque les éléments d'habillage (200) sont reliés entre eux.

15. Système d'habillage selon l'une des revendications précédentes, **caractérisé en ce qu'**au moins un élément d'habillage (200) est réalisé arrondi ou biseauté sur une zone de coin de telle manière que deux éléments d'habillage (200) reliés entre eux comportent des vides (101a, 101b) sur ces zones de coin, qui sont adaptés pour guider des câbles présents à l'intérieur du système d'habillage (100, 400, 500) vers l'extérieur par le biais de ces vides (101a, 101b).
